# EUROPÄISCHE PATENTSCHRIFT

(11) **EP 0 896 905 B1**
(45) Veröffentlichungstag und Bekanntmachung des Hinweises auf die Patenterteilung: **09.02.2005**
(21) Anmeldenummer: 98112726.9
(22) Anmeldetag: 09.07.1998
(51) Int. Cl.: B60R 16/02, B60Q 1/00, E05B 65/38

(54) **Druckschalter**
Pressure switch
Interrupteur à pression

(30) Priorität: 13.08.1997 DE 19734987
(43) Veröffentlichungstag der Anmeldung: 17.02.1999
(73) Patentinhaber: ROBERT BOSCH GMBH, 70442 Stuttgart (DE)
(72) Erfinder: Walter, Helmut, 76547 Sinzheim (DE); Bauer, Bertram, 76571 Gaggenau (DE)

(56) Entgegenhaltungen:
- DE-A- 2 831 634
- DE-A- 3 140 327
- DE-A- 3 641 276
- DE-C- 3 413 776

## Beschreibung

### Stand der Technik

Die Erfindung geht von einem Druckschalter mit den Merkmalen des Oberbegriffs des Anspruchs 1 aus.

Ein Druckschalter gemäß dem Oberbegriff von Anspruch 1 ist allgemein im Stand der Technik bekannt.

Eine Bidruckpumpe erzeugt gegenüber einem Umgebungsdruck sowohl einen Überdruck als auch einen Unterdruck. Sie wird in Fahrzeugen für eine Zentralverriegelung eingesetzt und von einem umsteuerbaren Elektromotor angetrieben. Je nach Drehrichtung erzeugt sie für die Entriegelung des Fahrzeugs Überdruck und für die Verriegelung Unterdruck. Nachdem ein vorgegebenes Druckniveau erreicht ist, das die Schließfunktion sicherstellt, wird die Pumpe abgeschaltet. Dies geschieht in der Regel bei ca. 500 Millibar Unterdruck oder Überdruck relativ zum Umgebungsdruck.

Bei bekannten Lösungen sind für den Überdruck und Unterdruck getrennte Signalleitungen vorgesehen, die über jeweils getrennte Kontakte geschaltet werden. Somit wird getrennt erfaßt, ob Überdruck oder Unterdruck vorliegt und ob ein vorgegebener Druckwert erreicht ist.

### Vorteile der Erfindung

Nach der Erfindung schalten die Kontakte des Druckschalters für den Überdruck und Unterdruck eine einzige Signalleitung. Die Erfindung geht von der Erkenntnis aus, daß es für die Funktion des Systems nicht notwendig ist, zwischen Überdruck und Unterdruck zu unterscheiden, sondern daß es ausreicht, zu erkennen, ob ein vorgegebenes Druckniveau erreicht ist. Hierfür genügt eine Signalleitung. Dadurch kann eine Signalleitung entfallen und die damit verbundenen Lötanschlüsse eingespart werden. Da die Lötanschlüsse bei der Montage von Hand hergestellt werden und daher stets mit einem Qualitätsrisiko verbunden sind, wird dieses durch die Erfindung verringert.

Gemäß einer Ausgestaltung der Erfindung wird vorgeschlagen, daß die bisherigen Einzelkontakte zu einem Doppelkontakt verbunden sind. Somit können die bekannten Druckschalter mit geringfügigen Änderungen weiter verwendet werden. Nach einer weiteren Ausgestaltung der Erfindung betätigen Schaltglieder bei einem vorgegebenen Unterdruck oder Überdruck dieselben Kontakte, so daß ebenfalls ein Lötanschluß und eine Signalleitung entfallen können.

### Zeichnung

In der Zeichnung sind Ausführungsbeispiele der Erfindung dargestellt. In der Beschreibung und in den Ansprüchen sind zahlreiche Merkmale im Zusammenhang dargestellt und beschrieben. Der Fachmann wird die Merkmale zweckmäßigerweise auch einzeln betrachten und zu sinnvollen Kombinationen zusammenfassen.

Es zeigen:
- Fig. 1: ein Aufbauschema mit einem erfindungsgemäßen Druckschalter und einem Doppelkontakt und
- Fig. 2: einen Druckschalter mit Schaltgliedern für einen vorgegebenen Unterdruck oder Überdruck, die dieselben Kontakte betätigen.

### Beschreibung der Ausführungsbeispiele

Ein umsteuerbarer Elektromotor 12 treibt eine Bidruckpumpe 14 an, die je nach Drehrichtung einen Unterdruck oder einen Überdruck erzeugt, der über eine Druckleitung 16 auf ein nicht näher dargestelltes Verriegelungssystem eines Kraftfahrzeugs wirkt, und zwar in der Weise, daß der Überdruck eine Entriegelung des Fahrzeugs und der Unterdruck eine Verriegelung des Fahrzeugs bewirkt.

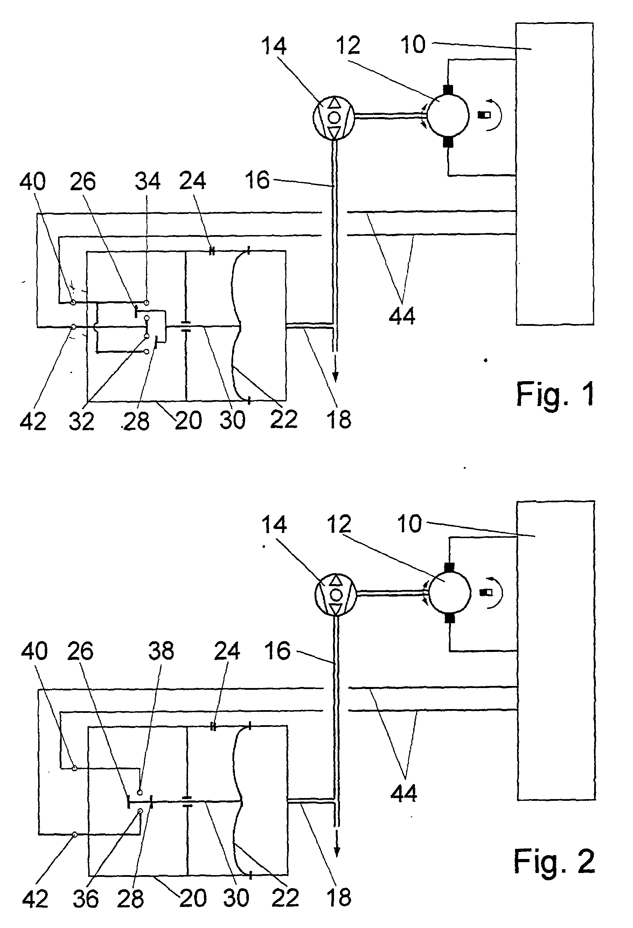

Der Elektromotor 12 wird von einer Steuereinheit 10 in Abhängigkeit verschiedener Parameter angesteuert. Zu diesen gehören die Signale eines Druckschalters 20, der in einer Signalleitung 44 angeordnet und über eine Meßleitung 18 mit der Druckleitung 16 verbunden ist. Über die Meßleitung 18 wirkt der von der Bidruckpumpe 14 erzeugte Druck auf eine Seite einer Membran 22 des Druckschalters 20, während über eine Öffnung 24 im Druckschalter 20 eine Verbindung zur Umgebung hergestellt wird, so daß auf die andere Seite der Membran 22 der Umgebungsdruck wirkt. Diese ist über eine Schaltstange 30 mit einem Schaltglied 26 für Unterdruck und einem Schaltglied 28 für Überdruck verbunden. Überschreitet der Überdruck bzw. der Unterdruck in der Meßleitung 18 einen vorgegebenen Wert, schließt das Schaltglied 26 bzw. das Schaltglied 28 die Signalleitung 44 über die Doppelkontakte 32 und 34 (Fig. 1), die zwei untereinander verbundene Kontaktpaare aufweisen. Die Signalleitung 44 ist über Lötanschlüsse 40 und 42 mit den Doppelkontakten 32, 34 des Druckschalters 20 verbunden. Bei der erfindungsgemäßen Ausführung sind nur eine Signalleitung 44 und zwei Lötanschlüsse 40 und 42 erforderlich.

Der Druckschalter 20 nach Fig. 2 unterscheidet sich von dem Druckschalter 20 nach Fig. 1 dadurch, daß nur zwei einfache Kontakte 36 und 38 vorgesehen sind, die sowohl mit dem Schaltglied 26 für den Überdruck als auch mit dem Schaltglied 28 für den Unterdruck zusammenwirken. Auch hierbei sind nur eine Signalleitung 44, die durch den Druckschalter 20 geschaltet wird, und zwei Lötanschlüsse 40 und 42 erforderlich.

## Patentansprüche

1. Druckschalter (20), der über Kontakte (32, 34, 36, 38) eine Bidruckpumpe (14) für Fahrzeuge bei einem vorgegebenen Wert für einen Überdruck oder einen Unterdruck abschaltet, **dadurch gekennzeichnet, dass** der Druckschalter über die Kontakte (32, 34, 36, 38) für das Überschreiten des vorgebbaren Werts für den Überdruck oder den Unterdruck die selbe genau zweipolige Signalleitung (44) schaltet.

2. Druckschalter (20) nach Anspruch 1, **dadurch gekennzeichnet, dass** die Kontakte als Doppelkontakte (32, 34) ausgebildet sind.

3. Druckschalter (20) nach Anspruch 1, **dadurch gekennzeichnet, dass** Schaltglieder (26, 28) bei einem vorgegebenen Unterdruck oder Überdruck dieselben Kontakte (36, 38) betätigen.

## Claims

1. Pressure switch (20) which, by means of contacts (32, 34, 36, 38), switches off a bi-pressure pump (14) for vehicles at a predefined value of excess pressure or low pressure, **characterized in that** the pressure switch switches the same, to be precise, two-pole signalling line (44) by means of the contacts (32, 34, 36, 38) for a situation in which the predefinable value for the excess pressure or the low pressure is exceeded.

2. Pressure switch (20) according to Claim 1, **characterized in that** the contacts are embodied as double contacts (32, 34).

3. Pressure switch (20) according to Claim 1, **characterized in that** switching elements (26, 28) activate the same contacts (36, 38) at a predefined low pressure or excess pressure.

## Revendications

1. Interrupteur à pression (20) qui, par des contacts (32, 34, 36, 38), interrompt le fonctionnement d'une pompe à double pression (14) de surpression ou de dépression destinée à des véhicules automobiles, quand une valeur prédéfinie est atteinte,
**caractérisé en ce que**
par l'intermédiaire des contacts (32, 34, 36, 38), l'interrupteur à pression (20) connecte une ligne de signal exactement pôles bipolaires (44) lorsque la surpression ou la dépression dépasse la valeur prédéfinie.

2. Interrupteur à pression (20) selon la revendication 1,
**caractérisé en ce que**
les contacts sont des double-contacts (32, 34).

3. Interrupteur à pression (20) selon la revendication 1,
**caractérisé en ce que**
des organes de connexion (26, 28) actionnent les mêmes contacts (36, 38) quand apparaît une surpression ou une dépression prédéfinie.
